Europäisches Patentamt

European Patent Office

Office européen des brevets

(19)

(11) Numéro de publication : **0 306 384 B1**

# FASCICULE DE BREVET EUROPEEN

(12)

(45) Date de publication du fascicule du brevet :
24.07.91 Bulletin 91/30

(51) Int. Cl.⁵ : **G01D 5/20, G01D 5/22**

(21) Numéro de dépôt : **88402091.8**

(22) Date de dépôt : **11.08.88**

(54) **Capteur de position sans contact mécanique.**

(30) Priorité : **28.08.87 FR 8712065**

(43) Date de publication de la demande :
**08.03.89 Bulletin 89/10**

(45) Mention de la délivrance du brevet :
**24.07.91 Bulletin 91/30**

(84) Etats contractants désignés :
**BE ES GB IT NL**

(56) Documents cités :
**DE-A- 1 213 310
FR-A- 2 108 491
FR-A- 2 212 532
FR-A- 2 364 432
FR-A- 2 587 795
US-A- 3 032 754
US-A- 3 890 607
US-A- 4 052 686**

(73) Titulaire : **MERLIN GERIN
Rue Henri Tarze
F-38050 Grenoble Cédex (FR)**

(72) Inventeur : **Sellier, Pierre
Merlin Gerin Sce. Brevets
F-38050 Grenoble Cédex (FR)**
Inventeur : **Fontanella, Claude
Merlin Gerin Sce. Brevets
F-38050 Grenoble Cédex (FR)**
Inventeur : **Fretti, Jean-Paul
Merlin Gerin Sce. Brevets
F-38050 Grenoble Cédex (FR)**
Inventeur : **Borruey, Daniel
Merlin Gerin Sce. Brevets
F-38050 Grenoble Cédex (FR)**

(74) Mandataire : **Kern, Paul et al
Merlin Gerin Sce. Brevets 20, rue Henri Tarze
F-38050 Grenoble Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif de détection, sans aucun contact mécanique, de la position d'un élément mobile suivant une trajectoire prédéterminée, comportant un capteur de position du type à transformateur dans lequel un enroulement primaire est constitué par une pluralité de bobines élémentaires connectées électriquement en série et intercalées entre les bobines élémentaires constituant un enroulement secondaire.

Les dispositifs détecteurs de position de ce type sont utilisés dans de nombreux domaines et ils présentent un grand intérêt lorsque l'élément mobile est dans un milieu fermé dans lequel on ne peut introduire de composants mécaniques ou électriques en raison des propriétés de ce milieu. Une application particulière de tels dispositifs consiste à contrôler la position des barres de commande dans les réacteurs nucléaires.

Le brevet français 2169437 et son certificat d'addition 2182400 décrivent tous deux des capteurs de position sans contact mécanique, du type à transformateur, dans lesquels l'enroulement secondaire est constitué par des couples de bobines, disposés régulièrement le long de la trajectoire de l'élément mobile et délivrant chacun un signal différentiel de valeur nulle pour toute position de l'élément mobile engendrant un même couplage inductif entre l'enroulement primaire et les deux bobines dudit couple.

Dans le certificat d'addition précité, les bobines de l'enroulement secondaire sont disposées de manière à fournir une information numérique codée, par exemple en code GRAY, à un dispositif de traitement relié au capteur.

On connaît par ailleurs (FR-A-2212532) un système de mesure de position permettant une mesure redondante, utilisant un capteur du type à variation d'impédance. Dans ce système connu deux groupes de bobines de détection sont imbriqués de manière à fournir des signaux de sortie distincts, les signaux de sortie de chacun des groupes contenant l'information nécessaire à indiquer la position d'un élément avec une résolution égale à la moitié de celle de l'ensemble du système. Ainsi, un mauvais fonctionnement de l'un des groupes n'interdit pas le fonctionnement de l'ensemble du système mais réduit la résolution de la donnée de position.

La présente invention a pour but l'amélioration de la sécurité des capteurs de position connus par utilisation du principe de la redondance, sans que cette redondance entraîne une réduction de la résolution de la mesure.

Selon la présente invention, ce but est atteint avec un capteur du type à transformateur par le fait que ledit capteur comporte plusieurs enroulements primaires superposés et plusieurs enroulements secondaires superposés de manière à former plusieurs redondances délivrant des signaux indépendants, les enroulements de l'une des redondances étant isolés électriquement par rapport aux enroulements des autres redondances.

Un tel capteur comporte, de préférence, 3 redondances constituées par trois enroulements primaires superposés et trois enroulements secondaires superposés, un seul des enroulements primaires étant alimenté à un instant donné. En cas de défaillance de cet enroulement primaire, le défaut est détecté et signalé et un autre enroulement primaire est alors alimenté.

Dans un mode de réalisation préférentiel, le dispositif selon l'invention comporte un dispositif d'alimentation indépendant pour chaque enroulement primaire, ce dispositif comportant un circuit de commande contrôlant l'alimentation de l'enroulement primaire correspondant par l'intermédiaire d'un commutateur statique disposé entre le réseau et l'enroulement primaire.

Selon un développement de l'invention, chaque dispositif d'alimentation comporte des moyens de détection et de régulation du courant qu'il délivre à l'enroulement primaire associé, et des moyens de détection de la tension aux bornes dudit enroulement primaire, les signaux de sortie desdits moyens de détection étant appliqués au circuit de commande du dispositif d'alimentation de manière à ce que celui-ci commande l'ouverture du commutateur statique lorsque le courant le traversant est en dehors d'une plage de fonctionnement prédéterminée, et commande la fermeture dudit commutateur statique, après une période de temporisation prédéterminée, lorsque le signal de sortie du détecteur de tension est inférieur à une valeur prédéterminée.

D'autres avantages et caractéristiques de l'invention ressortiront de la description qui va suivre d'un mode de mise en oeuvre de l'invention donné à titre d'exemple non limitatif et représenté aux dessins annexés, sur lesquels :

— la figure 1 représente une partie d'un capteur de position selon l'invention ;

— la figure 2 représente un schéma de connexion des bobines primaires et secondaires d'un capteur de position selon l'invention ;

— la figure 3 illustre les différentes courbes de variation des signaux de tension délivrés par les groupes de bobines secondaires selon la figure 2 ; et

— la figure 4 représente, sous forme de schéma-bloc, une redondance d'un capteur selon l'invention avec les dispositifs d'alimentation et de traitement associés.

Le capteur selon l'invention est destiné à détecter, sans aucun contact mécanique, la position d'un élément mobile (non représenté), en matériau magnétique, susceptible de se déplacer linéairement suivant un axe, par exemple une barre de commande d'un réacteur nucléaire.

Le capteur est constitué de plusieurs sous-ensembles de manière à fournir une redondance du système.

Chacun des sous-ensembles, ou redondance, permet d'obtenir une mesure distincte de la position de l'élément mobile, les différentes mesures étant totalement indépendantes les unes des autres et chacune des redondances fournissant une mesure dont la résolution est identique à celle du capteur.

De cette manière la défaillance de l'une des redondances n'entraîne aucune réduction de la résolution de la mesure.

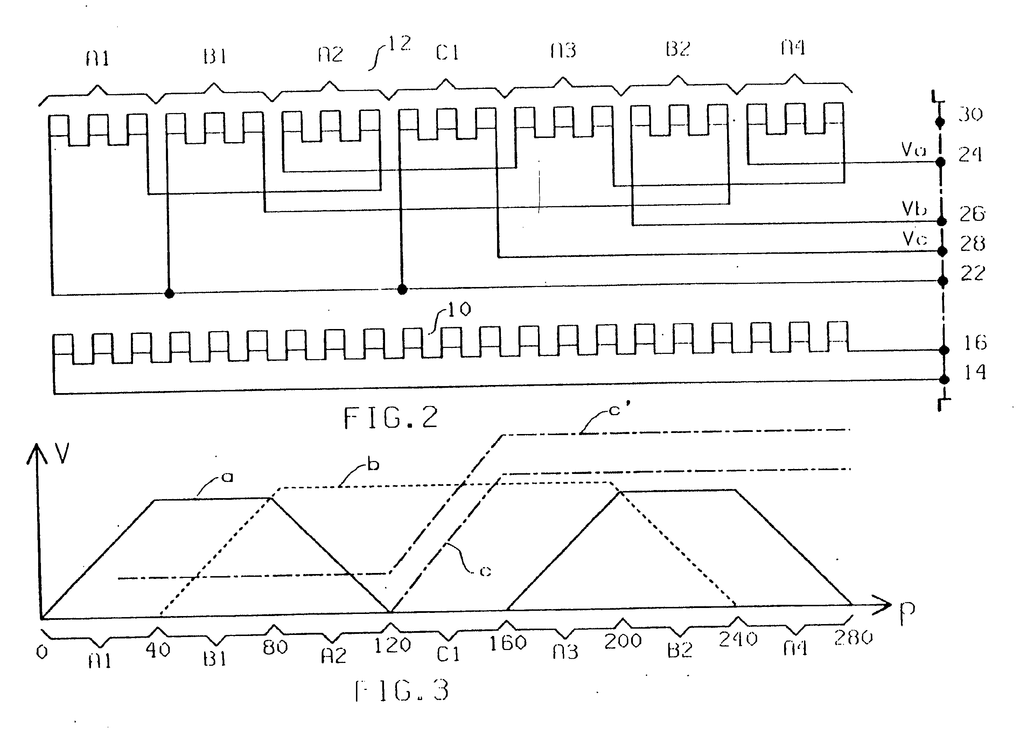

Le capteur est du type à transformateur, chaque redondance comportant, comme représenté à la figure 2, un enroulement primaire 10 et un enroulement secondaire 12, coaxiaux, entourant l'axe de déplacement de l'élément mobile sur toute la trajectoire de celui-ci.

Dans les capteurs du type à transformateur connus, tels que ceux décrits, par exemple, dans le brevet français 2169437 et dans son certificat d'addition 2182400, qui ne comportant pas de redondance, un enroulement primaire 10 est alimenté par une source de courant alternatif de manière à engendrer un flux inducteur constant à l'intérieur de cet enroulement, le couplage entre l'enroulement primaire 10 et un enroulement secondaire 12, et donc la tension induite dans l'enroulement secondaire, variant en fonction de la position de l'élément mobile et pouvant en conséquence constituer une mesure de cette position. On se référera aux deux documents précités pour une description plus détaillée du fonctionnement d'un tel capteur.

Le capteur selon l'invention comporte plusieurs enroulements primaires superposés et plusieurs enroulements secondaires superposés, les enroulements de l'une des redondance étant isolés électriquement par rapport aux enroulements des autres redondances.

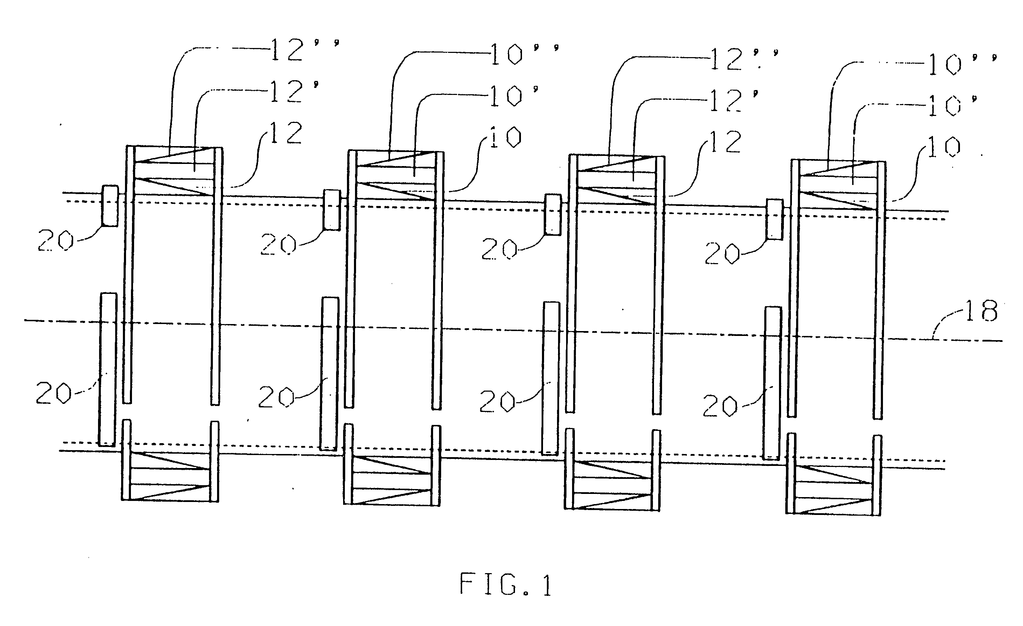

Chaque enroulement primaire 10 est constitué par une pluralité de bobines élémentaires connectées électriquement en série entre deux bornes d'entrée 14 et 16 et intercalées entre les bobines élémentaires constituant l'enroulement secondaire 12 de la redondance, comme schématisé sur les figures 1 et 2.

La figure 1 représente une partie d'un capteur selon l'invention, comportant, autour de l'axe 18 de déplacement de l'élément mobile, deux bobines élémentaires des enroulements primaires surperposés 10, 10', 10" de trois redondances, ces bobines étant imbriquées avec deux bobines élémentaires des enroulements secondaires superposés 12, 12', 12" des trois redondances.

Trois secteurs 20 (un par redondance), sont disposés entre deux bobines adjacentes et sont utilisés pour la fixation des fils de connexion (non représentés) des bobines élémentaires entre elles.

L'invention peut être utilisée avec tout type de capteur dans lequel les bobines élémentaires de l'enroulement primaire d'une redondance sont intercalées entre les bobines élémentaires de l'enroulement secondaire de ladite redondance.

Dans un mode de réalisation préféré, représenté sur la figure 2, l'enroulement secondaire 12 de chaque redondance du capteur comporte trois groupes de bobines A, B et C dont une extrémité est reliée à une borne de sortie commune 22, tandis que les autres extrémités des groupes A, B et C sont connectées respectivement à trois bornes de sorties distinctes 24, 26 et 28, de manière à engendrer trois signaux de sortie Va, Vb et Vc distincts.

Le groupe A est constitué par 4 sous-groupes A1, A2, A3 et A4, le groupe B par 2 sous-groupes B1 et B2 et le groupe C par un sous-groupe unique C1. Les sous-groupes A1 et A2 sont connectés électriquement en opposition pour constituer un couple produisant un signal différentiel, les sous-groupes A3 et A4 étant également connectés en opposition pour constituer un second couple produisant un second signal différentiel.

Comme représenté sur la figure, les deux couples A1, A2 et A3, A4, du groupe A sont de préférence reliés en opposition les uns aux autres, de manière à éviter d'additionner les signaux résiduels non nuls de chacun des couples.

De manière analogue, les sous-groupes B1 et B2 du groupe B sont connectés électriquement en opposition.

Une telle connexion des bobines de l'enroulement secondaire a déjà été décrite dans le certificat d'addition 2182400 précité, dans lequel le dispositif de traitement des signaux de sortie du capteur transforme ces signaux en signaux numériques formant un code logique, le code GRAY, au moyen de déclencheurs à seuil permettant de détecter le passage de l'un des signaux de sortie d'un état logique à un autre. De cette manière le dispositif de traitement dispose, pour un enroulement secondaire constitué de trois groupes de bobines A, B et C connectées de la manière indiquée ci-dessus, d'une information codée sur 3 bits représentative de la position de l'élément mobile, ce qui permet de déterminer huit positions de l'élément mobile.

Une telle précision n'est généralement pas suffisante en pratique, surtout aux extrémités des capteurs, et il a été proposé d'augmenter la précision en augmentant le nombre de groupes de bobines de l'enroulement secondaire et en transmettant une information codée sur un nombre supérieur de bits. Cependant une augmentation du nombre de bits implique une augmentation du nombre de fils, ce qui pose des problèmes de connexion.

Le mode de réalisation représenté sur la figure 2, permet d'obtenir, pour chaque redondance, une précision supérieure à celle qu'il serait possible d'obtenir avec une information codée sur 5 bits tout en conservant, pour chaque redondance, le même nombre de bornes que dans un capteur à 3 bits, à savoir les deux bornes 14 et 16 d'entrée de l'enroulement primaire, les 4 bornes 22, 24, 26 et 28 de sortie de l'enroulement secondaire, et une borne 30 à laquelle est reliée la masse mécanique du capteur, soit au maximum 7 bornes.

Pour cela chaque sous-groupe (A1, A2, A3, A4, B1, B2 et C1) de bobines de l'enroulement secondaire 12 d'une redondance est constitué d'une pluralité de bobines élémentaires connectées électriquement en série à l'intérieur du sous-groupe. Dans le mode de réalisation préférentiel représenté sur la figure 2, chacun des sous-groupes comporte 3 bobines élémentaires.

Bien entendu, il est possible d'augmenter le nombre de bobines élémentaires de chaque sous-groupe, ce qui permet d'améliorer encore la précision de la mesure. Cependant, pour une application donnée, le nombre total de bobines élémentaires pouvant être disposées le long de la trajectoire de l'élément mobile est limité. A titre d'exemple, un capteur de position utilisé pour le contrôle de la position des barres d'un réacteur nucléaire comporte en pratique entre 20 et 40 bobines dans un enroulement secondaire. Lorsque ces bobines sont divisées en sept sous-groupes connectés de manière à former 3 groupes pour engendrer 3 signaux de sortie formant un code logique, par exemple un code GRAY, le nombre maximal de bobines élémentaires dans chaque sous-groupe ne peut dépasser 6.

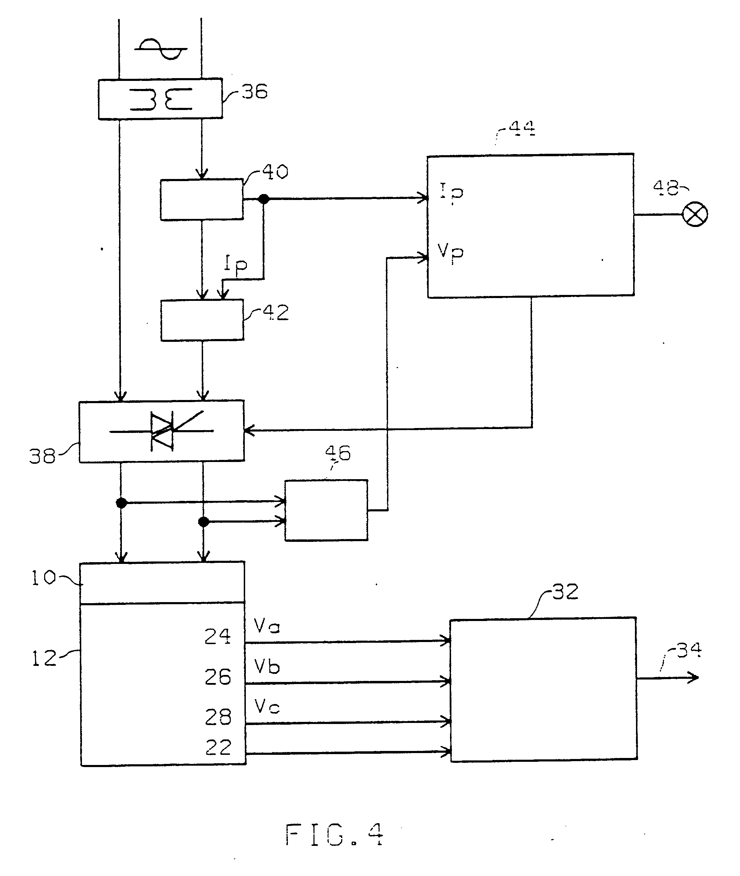

La figure 3 représente les signaux de tension induits dans les différents groupes (A, B et C) d'un enroulement secondaire en fonction de la position de l'élément mobile, lorsque l'un des enroulements primaires 10 est alimenté par une source de courant alternatif constant.

La courbe a, en trait plein, représente en fonction de la position de l'élément mobile, le signal de tension Va présent entre la borne 24 de sortie des bobines du groupe A et la borne de sortie commune 22. Sur la figure 3 la position de l'élément mobile est exprimée en nombre de pas "p", cette grandeur étant celle classiquement utilisée pour représenter la course d'une barre de commande d'un réacteur nucléaire.

La courbe b, en pointillé, représente le signal de tension Vb présent entre la borne de sortie commune 22 et la borne 26 de sortie des bobines du groupe B, tandis que la courbe c représente le signal de tension Vc présent entre la borne de sortie commune 22 et la borne 28 de sortie des bobines du groupe C.

Il ressort clairement de la figure 3 qu'à chaque position de l'élément mobile correspond un point situé sur un flanc montant ou descendant de l'une des courbes a, b ou c. Cette caractéristique est utilisée par un dispositif (non représenté) de traitement des signaux Va, Vb et Vc de sortie du capteur de position pour déterminer avec précision la position de l'élément mobile. Le dispositif de traitement utilise la variation sensiblement linéaire de chacun des signaux de sortie Va, Vb et Vc lorsque l'élément mobile se déplace en regard des bobines élémentaires d'un sous-groupe correspondant du groupe associé au signal considéré.

A tout instant les 3 signaux Va, Vb et Vc sont appliqués au dispositif de traitement. Dans un mode de réalisation préférentiel les 3 signaux de sortie Va, Vb et Vc sont multiplexés, puis convertis en signaux numériques et sérialisés pour être appliqués à un dispositif numérique de traitement, ce dernier comportant de préférence un ordinateur central comportant en mémoire des tables de correspondance, obtenues expérimentalement, entre les valeurs des signaux et la position de l'élément mobile.

Le dispositif de traitement combine, de façon logique, les informations qui lui sont fournies par les 3 signaux de sortie Va, Vb et Vc, de manière à déterminer en regard de quel sous-groupe se trouve l'élément mobile, et donc sur quel flanc, montant ou descendant, se trouve le signal à prendre en considération pour la détermination précise de la position de l'élément mobile.

A titre d'exemple, si les signaux Vb et Vc sont tous deux au niveau bas, la valeur associée de Va se trouve sur le premier flanc montant de la courbe a, correspondant au sous-groupe A1. Par contre, si Vb est au niveau haut, Vc restant au niveau bas, le dispositif de traitement est en mesure de déterminer que la valeur de Va se trouve sur le premier flanc descendant de la courbe a, correspondant au sous-groupe A2.

Comme représenté sur la figure 3, une telle disposition des bobines permet d'obtenir une réponse quasi-linéaire à l'intérieur d'un intervalle de déplacement de l'élément mobile correspondant à un sous-groupe, soit 40 pas dans le mode de réalisation représenté, ce qui permet d'obtenir une précision de mesure très supérieure à celle pouvant être obtenue avec un capteur à 3 bits de sortie selon le certificat d'addition précité, la précision étant de 40 pas, pour un déplacement maximal de 280 pas, dans ce dernier.

La stabilité de la mesure obtenue avec la disposition décrite ci-dessus est relativement bonne en raison de la connexion en opposition par couples des sous-groupes de chacun des groupes de manière à délivrer un signal différentiel de valeur nulle pour toute position de l'élément mobile engendrant un même couplage inductif entre l'enroulement primaire et chacun desdits sous-groupes du couple.

Il est néanmoins souhaitable de prévoir une correction de la mesure en fonction de la température, de manière à améliorer encore la précision de cette mesure.

Dans ce but une bobine supplémentaire, dite bobine basse, peut être disposée à l'entrée de l'enroulement secondaire de manière à être traversée en permanence par l'élément mobile. Cette bobine basse est incorporée au sous-groupe C1, c'est-à-dire qu'elle est électriquement connectée en série avec les autres bobines du sous-groupe C1, ce qui provoque un décalage vers le haut de la courbe c, comme représenté en c' sur la figure 3.

Des courbes d'étalonnage préenregistrées à chaud, par exemple pour une température prédéterminée de 100°C, étant mises en mémoire dans le dispositif de traitement, celui-ci compare la valeur des signaux Va, Vb et Vc de sortie d'une redondance avec les courbes d'étalonnage, détermine à partir du résultat de cette comparaison la température au moment de la mesure et la correction à apporter au signal mesuré.

La bobine basse 28 permet d'obtenir une bonne correction de température à l'extrémité inférieure du capteur, la valeur basse du signal Vc (courbe c') étant influencée essentiellement par la température du capteur.

A chaque redondance sont associés un dispositif d'alimentation et un dispositif de traitement indépendants de ceux des autres redondances (voir figure 4).

Les dispositifs d'alimentation des enroulements primaires 10, 10', 10", des différentes redondances étant complètement indépendants, c'est-à-dire ne comportant entre eux aucune liaison électrique, ils délivrent des signaux de courant ayant entre eux un déphasage aléatoire. En raison de la superposition des enroulements primaires des différentes redondances, ceci impose qu'à un moment donné, un seul des enroulements primaires soit alimenté. La structure du capteur conduit alors les enroulements secondaires 12, 12', 12" de toutes les redondances à réagir au passage du courant dans ledit enroulement, qui sert donc d'enroulement primaire pour toutes les redondances.

La figure 4 représente une redondance comportant un enroulement primaire 10 et un enroulement secondaire 12 fournissant sur ses quatres bornes de sortie 22, 24, 26, et 28, trois signaux distincts Va, Vb et Vc, vis à vis de la borne de sortie commune 22. Les quatres bornes de sortie de la redondance sont connectées à l'entrée d'un dispositif de traitement 32 affecté à ladite redondance et connecté par un bus 34 à un dispositif de traitement centralisé non représenté.

Le dispositif d'alimentation en courant alternatif de l'enroulement primaire 10 d'une redondance est représenté sous la forme de schéma-bloc sur la figure 4. Ce dispositif d'alimentation comporte un transformateur 36 connectant le réseau de tension alternative (220 V.) à l'enroulement primaire 10 par l'intermédiaire d'un commutateur statique 38 qui peut, par exemple, être constitué par un triac. L'enroulement primaire 10 n'est donc alimenté que lorsque le commutateur statique 38 est fermé. Pour maintenir constant le courant alternatif parcourant l'enroulement primaire 10 lorsque celui-ci est alimenté, le dispositif d'alimentation comporte un dispositif de régulation interposé sur le trajet de courant entre le transformateur 36 et l'enroulement primaire 10. Un tel dispositif de régulation, de type connu, comporte essentiellement un détecteur de courant 40 pilotant un circuit de régulation 42 qui délivre le courant constant désiré après comparaison de la valeur Ip du courant primaire mesurée à une valeur de référence prédéterminée.

Le dispositif d'alimentation de l'enroulement primaire d'une redondance comporte de plus un circuit 44 de commande du commutateur statique. Ce circuit de commande reçoit les signaux de sortie Ip du détecteur de courant 40 et Vp d'un détecteur de tension 46 mesurant la tension appliquée au primaire. En raison de leur superposition, il existe un couplage magnétique entre les enroulements primaires des différentes redondances, de sorte qu'un signal de tension Vp, supérieur à une valeur minimale prédéterminée, est présent aux bornes de tous les enroulements primaires dès que l'un d'eux est alimenté en courant. L'absence de tension, ou plutôt le passage de la tension Vp en dessous de ladite valeur minimale prédéterminée, signifie donc qu'aucun des enroulements primaires n'est alimenté.

En fonctionnement normal, un seul des enroulements primaires est alimenté en courant, son commutateur statique 38 étant fermé, les commutateurs statiques des dispositifs d'alimentation associés aux autres redondances étant ouverts. Tant que le courant Ip détecté dans le dispositif d'alimentation de l'enroulement primaire alimenté est compris dans une plage de fonctionnement prédéterminée, le circuit 44 de commande du commutateur statique 38 associé, maintient celui-ci fermé et, tous les détecteurs de tension 46 détectant une tension Vp supérieure à la valeur minimale prédéterminée, les circuits 44 de commande des différents commutateurs statiques maintiennent ceux-ci dans la même position, c'est-à-dire fermé pour le dispositif délivrant le courant Ip et ouverts pour les autres redondances.

En cas de défaut sur l'enroulement primaire alimenté, sur l'alimentation ou sur la source d'énergie (réseau), le courant Ip, détecté dans le dispositif d'alimentation de l'enroulement primaire alimenté, sort de sa plage de fonctionnement. A titre d'exemple, le courant Ip s'annule si l'enroulement primaire est en circuit ouvert, ou dépasse une valeur prédéterminée si le dispositif de régulation 40, 42 ne fonctionne pas correctement. Dans tous ces cas, le circuit 44 de commande associé, commande l'ouverture du commutateur statique 38 associé, mémorise le défaut et envoie un signal de défaut à un circuit d'alarme 48. Après ouverture du commutateur statique, la tension Vp baisse, ce qui est signalé aux circuits de commande 44 de toutes les redondances par les détecteurs de tension 46. Cette détection met en route une période de temporisation, de durée prédéterminée différente pour chacune des redondances. Le dispositif d'alimentation de la redondance dont le primaire est alimenté en temps normal a la période de temporisation la plus courte et commande la fermeture de son commutateur statique au bout de cette période. En cas d'initialisation à la mise sous tension, c'est donc toujours le même dispositif d'alimentation, prioritaire, qui alimentera l'enroulement primaire associé. Si un défaut a été mémorisé par le circuit de commande 44 du dispositif d'alimentation prioritaire, celui-ci ne refermera pas le commutateur statique associé et, au bout de la période de temporisation immédiatement supérieure, le circuit de commande d'un autre dispositif d'alimentation commandera l'alimentation de l'enroulement primaire associé. Dès que celui-ci sera alimenté, une tension Vp suffisante, sera détectée et signalée à tous les circuits de commande, interrompant la temporisation du dispositif d'alimentation ayant la période de temporisation la plus longue. Bien entendu, si le second dispositif d'alimentation devenait défaillant, la même procédure serait appliquée et le dernier dispositif d'alimentation prendrait la relève. A titre d'exemple non limitatif, ces périodes de temporisation respectives, pour un capteur à trois redondances, peuvent être de 500 ms, 1 s et 1,5 s.

L'invention n'est pas limitée au mode de réalisation préférentiel représenté sur la figure 1, dans lequel le capteur comporte 3 redondances. Idéalement, un capteur destiné à la détection des barres de commande d'un réacteur nucléaire devrait comporter 4 redondances connectées à 4 chaines de protection indépendantes, de manière à assurer une sécurité maximale. Cependant la présence de 4 redondances nécessite un nombre plus élevé de traversées étanches, ce qui conduit à un surcoût qui peut ne pas être justifié par l'accroissement relatif à la sécurité. De même il peut parfois apparaître suffisant d'utiliser un système à deux redondances, qui bien que n'assurant pas la même sécurité que les systèmes à 3 ou 4 redondances, est également plus économique. Ainsi le nombre de redondances à utiliser dans chaque cas, compris entre 2 et 4, est à déterminer en fonction d'un compromis entre le coût du système et la sécurité recherchée.

Dans un réacteur nucléaire on a généralement 4 barres de commande, assemblées en sous-groupe, se déplaçant en même temps. On prévoit donc de disposer un capteur selon l'invention, par exemple à 3 redondances, vis à vis de chacune des barres de manière à en détecter la position. Afin d'économiser le nombre de fils, on alimente de préférence en série, par un même dispositif d'alimentation selon la figure 4, les enroulements primaires, correspondant à une même redondance, des quatre capteurs d'un même sous-groupe. Afin d'annuler les parasites, les enroulements primaires associés à une redondance donnée seront de préférence connectés de manière à ce que chacun soit en opposition de phase avec les enroulements primaires adjacents des autres capteurs.

## Revendications

1. Dispositif de détection, sans aucun contact mécanique, de la position d'un élément mobile suivant une trajectoire prédéterminée, comportant un capteur de position du type à transformateur dans lequel un enroulement primaire (10) est constitué par une pluralité de bobines élémentaires connectées électriquement en série et intercalées entre des bobines élémentaires constituant un enroulement secondaire (12), dispositif caractérisé en ce que ledit capteur comporte plusieurs enroulements primaires superposés (10, 10', 10") et plusieurs enroulements secondaires superposées (12, 12, 12") de manière à former plusieurs redondances délivrant des signaux indépendants, les enroulements de l'une des redondances étant isolés électriquement par rapport aux enroulements des autres redondances.

2. Dispositif selon la revendication 1, caractérisé en ce que le nombre de redondances du capteur est compris entre deux et quatre.

3. Dispositif selon la revendication 2, caractérisé en ce que le capteur comporte trois redondances constituées par trois enroulements primaires superposés et trois enroulements secondaires superposés.

4. Dispositif selon l'une quelconque des revendications 1 à 3, caractérisé en ce qu'il comporte, pour chacune des redondances, un dispositif d'alimentation de l'enroulement primaire indépendant et un dispositif de traitement (32) indépendant.

5. Dispositif selon la revendication 4, caractérisé en ce qu'à tout moment un seul des enroulements primaires (10, 10', 10") est alimenté en courant (Ip) par le dispositif d'alimentation correspondant, chaque dispositif d'alimentation comportant un circuit de commande (44) contrôlant l'alimentation de l'enroulement primaire correspondant par l'intermédiaire d'un commutateur statique (38) disposé entre le réseau et l'enroulement primaire.

6. Dispositif selon la revendication 5, caractérisé en ce que chaque dispositif d'alimentation comporte des moyens de détection (40) et de régulation (42) du courant (Ip) qu'il délivre à l'enroulement primaire (10, 10', 10") associé, et des moyens (46) de détection de la tension (Vp) aux bornes dudit enroulement primaire, les signaux (Ip, Vp) de sortie desdits moyens (40, 46) de détection étant appliqués au circuit de commande (44) du dispositif d'alimentation de manière à ce que celui-ci commande l'ouverture du commutateur statique (38) lorsque le courant le traversant est en dehors d'une plage de fonctionnement prédéterminée, et commande la fermeture dudit commutateur statique (38), après une période de temporisation prédéterminée, lorsque le signal (Vp) de sortie du détecteur de tension (46) est inférieur à une valeur prédéterminée.

7. Dispositif selon la revendication 6, caractérisé en ce que, pour chaque dispositif d'alimentation, ladite période de temporisation prédéterminée est différente de celles des dispositifs d'alimentation des autres redondances.

8. Dispositif selon l'une des revendications 6 et 7, caractérisé en ce que chaque circuit de commande (44) comporte une sortie délivrant un signal de défaut lorsqu'une défaillance est détectée par ledit circuit.

**Patentansprüche**

1. Detektiervorrichtung, ohne jeglichen mechanischen Kontakt, der Stellung eines beweglichen Elementes gemäss einer vorbestimmten Bahn, mit einem Stellungsfühler vom Transformatorentyp, in dem eine Primärwicklung (10) von einer Mehrzahl von Elementarspulen gebildet wird, die elektrisch in Serie geschaltet und zwischen Elementarspulen eingefügt sind, die eine Sekundärwicklung (12) bilden, Vorrichtung, dadurch gekennzeichnet, dass der genannte Fühler mehrere übereinandergelagerte Primärwicklungen (10, 10', 10") und mehrere übereinandergelagerte Sekundärwicklungen (12, 12', 12") aufweist, so um mehrere Redundanzen zu bilden, die unabhängige Signale abgeben, wobei die Wicklungen einer der Redundanzen in Bezug auf die Wicklungen der anderen Redundanzen elektrisch isoliert sind.

2. Vorrichtung nach Anspruch 1, dadurch gekennzeichnet, dass die Anzahl der Redundanzen des Fühlers zwischen zwei und vier beträgt.

3. Vorrichtung nach Anspruch 2, dadurch gekennzeichnet, dass der Fühler drei Redundanzen aufweist, die von drei übereinandergelagerten Primärwicklungen und von drei übereinandergelagerten Sekundärwicklungen gebildet werden.

4. Vorrichtung nach irgend einem der Ansprüche 1 bis 3, dadurch gekennzeichnet, dass sie für jede der Redundanzen eine unabhängige Speisevorrichtung der Primärwicklung und eine unabhängige Verarbeitungsvorrichtung (32) aufweist.

5. Vorrichtung nach Anspruch 4, dadurch gekennzeichnet, dass jederzeit eine einzige der Primärwicklungen (10, 10', 10") mit Strom (Ip) durch die entsprechende Speisevorrichtung versorgt wird, wobei jede Speisevorrichtung einen Stromsteuerkreis (44) aufweist, der die Versorgung der entsprechenden Primärwicklung mit Hilfe eines statischen Schalters kontrolliert, der zwischen dem Netz und der Primärwicklung angeordnet ist.

6. Vorrichtung nach Anspruch 5, dadurch gekennzeichnet, dass jede Speisevorrichtung Detektiermittel (40) und Regelungsmittel (42) des Stroms (Ip) aufweist, den sie an die zugeordnete Primärwicklung (10, 10', 10") abgibt, sowie Detektiermittel (46) der Spannung (Vp) an den Klemmen der genannten Primärwicklung, wobei die Ausgangssignale (Ip, Vp) der genannten Detektiermittel am Steuerkreis (44) der Speisevorrichtung angelegt werden, damit diese die Oeffnung des statischen Schalters (38) steuert, wenn der ihn durchfliessende Strom ausserhalb eines vorbestimmten Betriebsbereiches liegt, und das Schliessen des statischen Schalters (38) steuert, nach einer vorbestimmten Verzögerungsperiode, wenn das Ausgangssignal (Vp) des Spannungsdetektors (46) unter einem vorbestimmten Wert liegt.

7. Vorrichtung nach Anspruch 6, dadurch gekennzeichnet, dass die genannte vorbestimmte Verzögerungsperiode für jede Speisevorrichtung unterschiedlich ist von denen der Speisevorrichtungen der anderen Redundanzen.

8. Vorrichtung nach einem der Ansprüche 6 bis 7, dadurch gekennzeichnet, dass jeder Steuerkreis (44) einen Ausgang aufweist, der ein Fehlersignal abgibt, wenn ein Versagen durch den genannten Kreis detektiert wird.

**Claims**

1. A detection device, without any mechanical contact, of the position of a movable part according to a predetermined trajectory, comprising a transformer-type position sensor in which a primary winding (10) is formed by a plurality of elementary coils electrically connected in series and fitted between elementary coils constituting a secondary winding (12), characterized in that said sensor comprises several superposed primary windings (10, 10', 10") and several superposed secondary windings (12, 12', 12") in such a way as to form several redundancies delivering independent signals, the windings of one of the redundancies being electrically insulated with respect to the windings of the other redundancies.

2. The device according to claim 1, characterized in that the number of redundancies of the sensor is comprised between two and four.

3. The device according to claim 2, characterized in that the sensor comprises three redundancies formed by three superposed primary windings and three superposed secondary windings.

4. The device according to any one of the claims 1 to 3, characterized in that it comprises, for each of the redundancies, an independent power supply device for the primary winding and an independent processing device (32).

5. The device according to claim 4, characterized in that at any time only one of the primary windings (10, 10', 10") is supplied with current (Ip) by the corresponding power supply device, each power supply device comprising a control circuit (44) controlling the power supply to the corresponding primary winding by means of a static switch (38) connected between the mains supply and the primary winding.

6. The device according to claim 5, characterized in that each power supply device comprises detection (40) and regulation (42) means of the current (Ip) which it delivers to the associated primary winding (10, 10', 10''), and detection means (46) of the voltage (Vp) at the terminals of said primary winding, the output signals (Ip, Vp) of said detection means (40, 46) being applied to the control circuit (44) of the power supply device so that the latter orders opening of the static switch (38) when the current flowing through it is outside a predetermined operating range, and orders closing of said static switch (38), after a predetermined time delay period, when the output signal (Vp) of the voltage detector (46) is lower than a predetermined value.

7. The device according to claim 6, characterized in that for each power supply device, said predetermined time delay period is different from those of the power supply devices of the other redundancies.

8. The device according to one of the claims 6 and 7, characterized in that each control circuit (44) comprises an output delivering a fault signal when a failure is detected by said circuit.

FIG.1

EP 0 306 384 B1

FIG.2

FIG.3

FIG.4